# EUROPÄISCHE PATENTSCHRIFT

(11) **EP 2 544 788 B1**
(45) Veröffentlichungstag und Bekanntmachung des Hinweises auf die Patenterteilung: **20.11.2013**
(21) Anmeldenummer: 11715380.9
(22) Anmeldetag: 10.03.2011
(51) Int. Cl.: B01D 29/68, B01D 37/02

(54) **VERFAHREN ZUR FILTRATION VON FLUIDEN SOWIE FILTERAPPARAT ZUR DURCHFÜHRUNG DES VERFAHRENS**
PROCESS FOR FILTRATION OF FLUIDS AND FILTER APPARATUS FOR PERFORMING THE PROCESS
PROCÉDÉ DE FILTRATION DE FLUIDES, AINSI QU'APPAREIL DE FILTRATION POUR LA MISE EN UVRE DU PROCÉDÉ

(30) Priorität: 12.03.2010 AT 15610 U
(43) Veröffentlichungstag der Anmeldung: 16.01.2013
(73) Patentinhaber: Lenzing Technik GmbH, 4860 Lenzing (AT)
(72) Erfinder: STRASSER, Stefan, A-4881 Strass im Attergau (AT); GRÖSSWANG, Roman, A-4850 Timelkam (AT); KNEISSL, Johannes, A-4852 Weyregg (AT); EISL, Georg, A-5020 Salzburg (AT); BRANDT, Klaus, A-4871 Zipf (AT)
(74) Vertreter: Hanemann, Otto
(86) Internationale Anmeldenummer: PCT/AT2011/000119
(87) Internationale Veröffentlichungsnummer: WO 2011/109847

(56) Entgegenhaltungen:
- EP-A1- 0 347 477
- DE-A1- 3 430 523
- GB-A- 524 385
- US-A- 3 574 509

## Beschreibung

Die Erfindung betrifft ein Verfahren zur Filtration von Fluiden, insbesondere von wässrigen Medien, sowie einen Filterapparat zur Durchführung des Verfahrens.

Grundsätzlich gibt es vier Modellvorstellungen für den Vorgang der Filtration. Es wird dabei unterschieden zwischen Kuchen-, Verstopfungs-, Tiefen- und Querstromfiltration. Rückspülfilterapparate bedienen sich meist der Verstopfungsfiltration, auch bezeichnet als Siebfiltration. Die Verstopfungsfiltration beschreibt den Vorgang bei dem die Feststoffpartikel die Poren des Filtermediums verstopfen, anders als bei der Kuchenfiltration wo sich die Feststoffpartikel an der Oberfläche ablagern und einen Filterkuchen wachsender Dicke bilden.

Es gibt hier mehrere Bauarten von Rückspülfiltern, die dem heutigen Stand der Technik entsprechen aber für die Kuchenbildung und hohe Feststoffgehalte weniger geeignet sind. Das System Saugdüsen Rückspülfilter wie in Patent US 20060043014 beschrieben hat einen großen Abstand von der Saugdüse zum Filtergewebe, der zu Bypass-Strömen führt. Diese sogenannten Bypass Ströme fließen direkt vom Unfiltratraum in die Rückspül-Abzugsvorrichtung, und verursachen Rückspülflüssigkeitsverluste, die nicht an der Abreinigung des Filtergewebes beteiligt sind. Diese konstruktionsbedingte Eigenschaft ist aber notwendig um eventuell im Medium vorhandene große Partikel den Weg in die Saugdüse zu ermöglichen. Daraus resultiert, dass der Abstand zwischen Saugdüse und Filtergewebe gleich bis größer sein muss als der Durchmesser des größten Partikels. Würden diese Partikel nicht ausgetragen werden, erfolgt eine Aufkonzentrierung im Unfiltratraum, und schließlich ein Verblocken des Filters. Würde man nun eine Kuchenbildung an diesem System zulassen, so würde aufgrund des höheren Rückspülflüssigkeitsbedarfes mehr Spülflüssigkeit benötigt als Filtrat zur Verfügung steht. Dies führt zum Verblocken des Filters und die Funktion des Filters ist nicht mehr gegeben.

Ein weiterer Rückspülfilterapparat ist der Kerzenrückspülfilter wie in Patent US 4415448 beschrieben. Die ungünstigste Lage eines Partikels im Filterelement vor der Rückspülung, liegt bei diesem Filtersystem an der Abzugsvorrichtung gegenüberliegenden Seite des Filterelementes. Es legt während der Rückspülung die gesamte Länge der Filterkerze als Weg zurück, bevor es aus der Filterkerze austritt, und in die Abzugsvorrichtung für die Rückspülflüssigkeit eintreten kann. Erst dann kann die Abzugsvorrichtung zum nächsten Element rotieren.

Während der dafür notwendigen Zeit fließt Rückspülflüssigkeit durch die gesamte Filterkerze ab, also auch im Bereich des günstigsten Partikels, welches sich zu Beginn der Rückspülung am einströmenden Ende der Filterkerze befindet.

Daraus resultieren bei einer kompletten Abreinigung der Filterkerzen große erforderliche Rückspülflüssigkeitsmengen um alle Partikel restlos zu entfernen. In der Praxis wird häufig nur ein Teil der Kerzen abgereinigt. Der Großteil bleibt verschmutzt. Somit wird bei derartigen Filtersystemen das Verhältnis von Rückspülflüssigkeit zu produziertem Filtrat bei größeren Feststoffmengen, wie sie bei der kuchenbildenden Filtration vorliegen so ungünstig, dass meist mehr Filtrat nötig wäre, als zur Verfügung steht. Die Funktion des Filters ist somit nicht mehr gegeben.

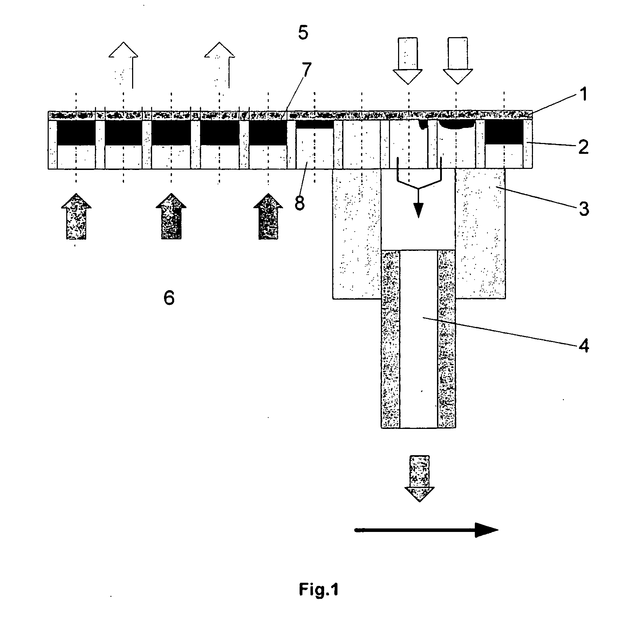

Im Filterapparat gemäß EP 0 058 656 A1, Lenzing AG, wird die Abdichtung des Unfiltrat-Raumes (6) gegenüber dem Rejekt-Raum (4) mittels eines angedrückten Gleitteiles (3) ausgeführt (Fig.1). Dadurch können Bypass Ströme unterbunden werden. Der gesamte Strom der Spülflüssigkeit geht bei der Rückspülung entgegen der Filtrationsrichtung durch das Filtermaterial (1) hindurch und hat somit Anteil an der Abreinigung des Filtermaterials.

Der längste Weg, den ein Partikel zurücklegen muss, bis es aus dem System ausgeschleust wird beträgt nur ca. 5mm, was der Wandstärke des perforierten Stützkörpers (2) entspricht. Anschließend befindet sich das Partikel bereits im Rejekt-Raum (4). Dadurch fällt deutlich weniger Rückspülmedium als bei vergleichbaren Systemen an. Dieses Filtersystem in der Ausführung gem. EP 0 058 656 A1, Lenzing AG ist zur Tiefenfiltration von viskosen Medien geeignet und wird vorzugsweise mit Vliesen aus Edelstahlfasern ausgerüstet und im Bereich der Filtration von Spinnlösungen eingesetzt.

Die beschriebene Ausführung ist nicht geeignet zur Filtration von niedrigviskosen, wässrigen Medien bei Anwesenheit von schwer filtrierbaren Partikeln.

Ausgehend von einem, mit diesem Rückspülfilterapparat, bestehend im wesentlichen aus einem zylindrischen Gehäuse, einem darin koaxial eingebauten zylindrischen und perforierten Stützkörper, einem Filtermaterial, einem Stützgewebe, sowie einer darin befindlichen beweglichen Rückspülvorrichtung, durchführbaren Filtrationsverfahren stellt sich die Erfindung die Aufgabe ein Verfahren zur Filtration von Fluiden, insbesondere von wässrigen Medien zur Verfügung zu stellen, welches Verfahren eine verbesserte Abtrennung von Fein- und Feinstpartikel, sowie von Partikeln mit schleimiger oder komprimierbarer Konsistenz ermöglicht und höhere Feststoffkonzentrationen erlaubt.

Das erfindungsgemäße Verfahren weist nachstehende Schritte auf:
a) Aufbau eines Filterkuchens in der Perforation des Stützkörpers,
b) Abscheidung der feineren Partikel bzw. der Partikel mit schleimiger oder komprimierbarer Konsistenz am oder im Filterkuchen,
c) Rückspülen nach Erreichen der vorgegebenen Filterbeladung oder des maximal zulässigen Differenzdruckes oder beim Unterschreiten eines minimalen Filtratvolumenstromes.

Eine weitere Aufgabe ist es einen Filterapparat zur Durchführung des erfindungsgemäßen Verfahrens zur Verfügung zu stellen.

Der erfindungsgemäße Filterapparat bestehend aus einem zylindrischen Gehäuse, einem darin koaxial eingebauten zylindrischen und perforierten Stützkörper, einem Filtermaterial, einem Stützgewebe, sowie einer darin befindlichen beweglichen Rückspülvorrichtung ist dadurch gekennzeichnet, dass das Filtermaterial aus einem Filtergewebe mit einer Luftdurchlässigkeit von 700 - 1300 l/m²s bei 200 Pa Differenzdruck besteht.

Diese Filtermaterialien erlauben sehr hohe Filtratströme bei sehr geringem Widerstand und sehr raschen Aufbau eines Filterkuchens.

Das Filtermaterial ist zwischen dem perforierten Stützkörper und dem Stützgewebe eingespannt, wobei das Filtermaterial vollflächig auf dem perforierten Stützkörper aufliegt und mittels einer Spannvorrichtung (nicht dargestellt) auf dem Stützkörper aufgespannt ist.

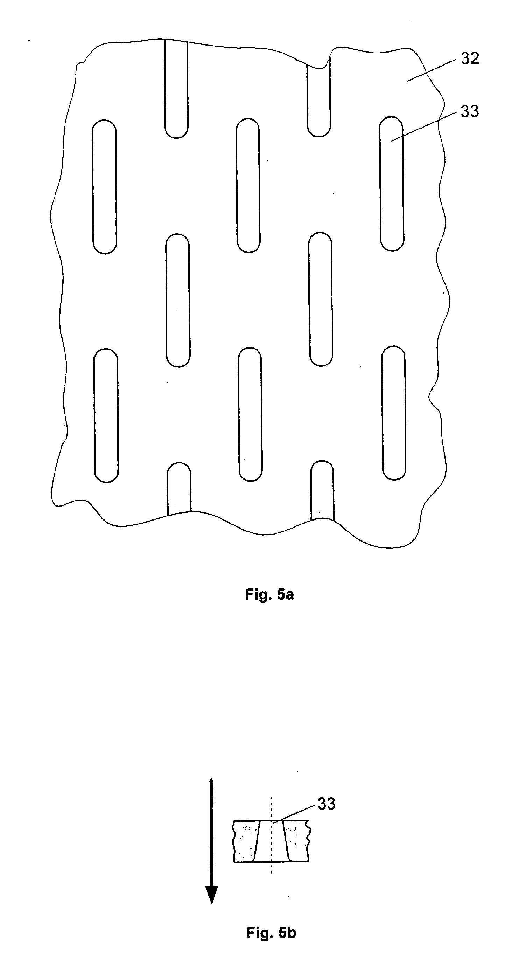

Ein weiteres geeignetes Filtermaterial ist in den Fig. 5a und 5b dargestellt. Es besteht aus einem Feinstlochblech (32) mit schlitzförmigen Öffnungen (33), wobei die Öffnungen wie in der Querschnittsansicht (Fig. 5b) zum Filtratraum erweitert und abgerundet sind. Die Schlitzbreite beträgt 5 - 80 Mikrometer, vorzugsweise 10 - 20 Mikrometer. Die freie Filterfläche beträgt 5 - 20 %, vorzugsweise 5 - 10 %, bezogen auf die Gesamtfläche des Filtermaterials. Die Filtrationsrichtung ist in Fig. 5b durch einen Pfeil angedeutet. Ein derartiges Filtermaterial erlaubt ebenfalls einen sehr raschen Aufbau eines Filterkuchens und führt zu einer verbesserten Rückspülbarkeit.

Der Filterkuchen befindet sich - nach dessen Aufbau - in den Perforationen des Stützkörpers und behindert dadurch die Rückspüleinrichtung nicht.

Eine Abdichtung durch den angedrückten Gleitteil verhindert einen direkten Fluss von Unfiltrat in den Rejektraum.

Die Erfindung wird anhand der nachstehenden Beschreibung und der Figuren 1 bis 4 näher dargelegt.

Fig. 1 zeigt den Aufbau der wesentlichen Filterbestandteile im Querschnitt. Ein Filtermaterial (1) liegt zwischen einem perforierten Stützkörper (2) und einem Stützgewebe (nicht dargestellt). Der linke Teil der Fig. 1 zeigt den in den Perforierungen (8) aufgebauten Filterkuchen (7). Die Filtration erfolgt vom Unfiltratraum (6) in Richtung Filtratraum (5), angedeutet durch Pfeile.

Im rechten Teil der Fig. 1 ist die Rückspülung angedeutet. Die Rückspülvorrichtung (3) + (4) wird in Richtung des waagrechten Pfeiles geführt.

Die Funktionsweise der Kuchenbildung am erfindungsgemäßen Filter lässt sich anhand von Fig. 1 folgendermaßen darstellen. Zu Beginn wird das mit Feststoff beladene Unfiltrat, vom Unfiltrat-Raum (6) durch das Filtermaterial (1) in den Filtratraum (5) gedrückt. Die groben Partikel lagern sich auf dem Filtermaterial (1) ab und bilden für die feineren Partikel eine Stützschicht. Mit Hilfe dieser Stützschicht können nun auch Partikel, die eine Korngröße weit unterhalb der Porengröße des Filtermaterials haben, abgetrennt werden. Es baut sich ein Filterkuchen (7) mit wachsender Dicke in den Bohrungen (8) auf bis der maximal zulässige Differenzdruck zwischen Unfiltrat - Raum (6) und Filtrat - Raum (5) erreicht oder ein minimaler Filtratvolumenstrom unterschritten wird. Nach abgeschlossenem Kuchenaufbau kann nun dieser sehr einfach und in wenigen Sekunden mit der Rückspülvorrichtung rückgespült und so die Filterfläche gereinigt werden. Eine Rückspülvorrichtung ist zum Beispiel aus der EP 0 056 656 (Lenzing AG) bekannt.

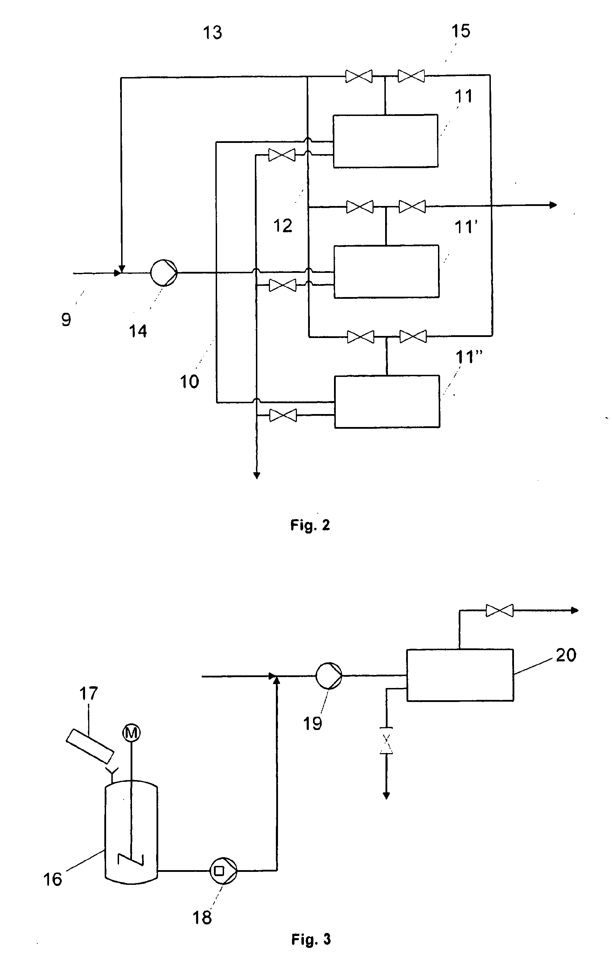

Fig. 2 zeigt ein Verfahrensfließbild zur Kreislaufführung.

Sind im Unfiltrat nur wenige grobe Partikel enthalten, so baut sich die wirksame Stützschicht für das Abfiltrieren der feinen Partikel langsam auf, ein Durchschlag der feinen Partikel erfolgt zu Beginn, das sogenannte Erstfiltrat oder auch Trübstoß genannt. Damit aber eine Filtratqualität mit einer konstant niedrigen Feststoffkonzentration erreicht werden kann, wird nun so lange im Kreislauf filtriert, bis die notwendige Stützschicht aufgebaut und sauberes Filtrat produziert werden kann. Eine notwendige Stützschicht ist dann gegeben, wenn keine feinen Partikel durch das Filtermaterial durchschlagen.

Für diesen Vorgang wird mit dem Unfiltrat aus der Unfiltratleitung (9) nun einer oder mehrere Filterapparate (11, 11', 11 ") versorgt. Bedingt das Verfahren mehrere Filterapparate so werden diese über eine Verteilerleitung (10) versorgt.

Das zu Beginn noch trübe Filtrat wird beim Einsatz eines einzigen Filterapparates direkt über die Rücklaufleitung (13) zurück vor die Pumpe (14) geleitet (Zirkulation). Beim Einsatz mehrerer Filterapparate geht das noch trübe Filtrat in eine Sammelleitung (12) und dann denn gleichen Weg über die Rücklaufleitung (13) zurück vor die Pumpe (14). Ist nun die gewünschte Filtratqualität durch die aufgebaute Stützschicht erreicht, so wird die Rücklaufleitung des jeweiligen Filters, geschlossen und die Filtratleitung (15) freigegeben.

Lässt sich der Feststoff im Unfiltrat aufgrund schleimiger oder komprimierbarer Konsistenz nur schlecht oder gar nicht mit dem eingesetzten Filtermaterial filtrieren, und würde dieser dadurch innerhalb kürzester Zeit zu einer Verblockung des Filtermaterials führen, so kann man Filterhilfsmittel zudosieren und so die Filtrationseigenschaften beeinflussen.

Fig.3 zeigt ein Verfahrensfließbild zur Verfahrensführung unter Zudosierung von Filterhilfsmitteln.

Dazu wird ein Filterhilfsmittel - Slurry in einem Slurrybehälter (16) angerichtet. Hergestellt wird der Slurry durch Mischen von Filtrat und Filterhilfsmittel (17). Das Filterhilfsmittel liegt meist pulverförmig vor und muss dadurch in das Filtrat eingerührt werden. Für die Filtration am Filterapparat wird der Slurry mithilfe einer zwangsfördernden Pumpe (18) vor die Unfiltratpumpe (19) im Zulauf zum Filter (20) aufgegeben. Die Dosierung von Filterhilfsmittel - Slurry erfolgt direkt nach Ende der Rückspülung im Filter. Durch die hohen Strömungsgeschwindigkeiten im Filter baut sich die Stützschicht sehr schnell auf. Die nachströmenden Feststoffe aus dem Unfiltrat können nun durch die Stützschicht zurückgehalten werden, legen sich auf der Stützschicht ab und bauen einen Filterkuchen auf.

Aus ökonomischer und ökologischer Hinsicht ist es sinnvoll das Filterhilfsmittel, soweit möglich, zurückzugewinnen.

Geeignete Filterhilfsmittel sind Feinsand, Metallpulver und andere feinkörnige schwere Pulver mit einem Kornspektrum von 30 Mikrometer bis 200 Mikrometer und einer Dichte von 1.500 kg/m³ bis 10.000 kg/m³, vorzugsweise von 2.000 kg/m³ bis 8.000 kg/m³, die zugesetzt werden müssen, bzw. bereits im Unfiltrat natürlich vorhanden sind, beispielsweise in sandhältigen Flusswässern.

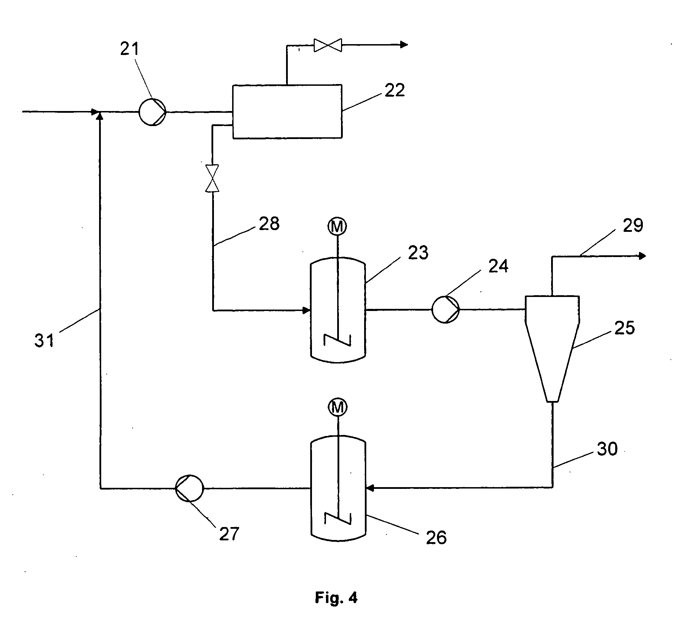

Fig. 4 zeigt ein Verfahrensfließbild zur Verfahrensführung mit Filterhilfsmittelrückgewinnung.

Zur Rückgewinnung wird die zyklisch anfallende Rückspülflüssigkeit (Rejekt) aus dem erfindungsgemäßen Filterapparat über die Rejektleitung (28) in einen Sammelbehälter (23) eingeleitet. Das vorliegende Rejekt besteht aus zu filtrierendes Medium, abzufiltrierender Feststoff und Filterhilfsmittel. Vom Sammelbehälter wird dann das Rejekt mittels Pumpe (24) auf einen Trennapparat (25) aufgegeben und die abzufiltrierenden Feststoffe vom Filterhilfsmittel durch Dichtetrennung abgetrennt. Der abzufiltrierende Feststoff wird im Oberlauf (29) und das Filterhilfsmittel als aufkonzentrierter Slurry im Unterlauf (30) abgezogen. Die Abtrennung kann durch die Zentrifugalkraft wie beispielsweise in einem Hydrozyklon unterstützt werden. Anschließend wird das zurückgewonnene Filterhilfsmittel im Slurry - Sammelbehälter (26) gespeichert. Je nach Bedarf wird dann das Filterhilfsmittel mittels Pumpe (27) vor der Filterpumpe (21) aufgegeben.

Bei der Verfahrensführung mit zugesetztem Filterhilfsmittel wird dieses zu Beginn des Filtrationsverfahrens in die Filterhilfsmittelrückgewinnung eingebracht, z.B. in den Sammelbehälter (23). Im Verlauf der Filtration werden Verluste an Filterhilfsmittel ebenso durch Zusatz der entsprechenden Menge ausgeglichen.

Beim Einsatz des erfindungsgemäßen Filterapparates ist dieses Verfahren deshalb besonders effektiv, weil aufgrund der niedrigen Regenerationszeit von wenigen Sekunden und aufgrund der geringen Dicke der Grundanschwemmung von nur einigen zehntel Millimeter der Verbrauch an Filterhilfsmittel sehr gering ist, und mit sehr hohen Filtrationsgeschwindigkeiten gearbeitet werden kann. Als Filtrationsgeschwindigkeit wird der Volumenstrom pro Filterfläche bezeichnet.

Bei den oben genannten Filtersystemen gemäß Stand der Technik müssen Grundanschwemmschichten zumindest eine Dicke von einigen Millimeter aufweisen, um sicher zu stellen, dass überall eine gleichmäßige Schicht vorhanden ist. Die Regeneration dieser Systeme dauert hier zumeist mehrere Minuten.

Als Rückspülung im Sinne der Erfindung ist auch der Austrag des Feststoffes mittels Gasen anzusehen.

In einer weiteren Ausführung der Erfindung wird nach Beendigung eines Filtrationszyklus das verbleibende Fluid aus dem Unfiltratraum, dem Filtratraum und dem Rejektraum mittels Prozessgas verdrängt und anschließend der Feststoff mit selbigem Gas getrocknet und pneumatisch ausgetragen.

## Patentansprüche

1. Verfahren zur Filtration von Fluiden, insbesondere von wässrigen Medien, mittels eines Rückspülfilterapparates bestehend aus einem zylindrischen Gehäuse, einem darin koaxial eingebauten zylindrischen und perforierten Stützkörper, einem Filtermaterial, einem Stützgewebe, sowie einer darin befindlichen beweglichen Rückspülvorrichtung, welches Verfahren nachstehende Schritte aufweist:
a) Aufbau eines Filterkuchens in der Perforation des Stützkörpers
b) Abscheidung der feineren Partikel bzw. der Partikel mit schleimiger oder komprimierbarer Konsistenz am oder im Filterkuchen
c) Rückspülen nach Erreichen der vorgegebenen Filterbeladung oder des maximal zulässigen Differenzdruckes oder beim Unterschreiten eines minimalen Filtratvolumenstromes.

2. Verfahren nach Anspruch 1, **dadurch gekennzeichnet, dass** das Filtrat zu Beginn der Filtration im Kreislauf geführt wird, bis die notwendige Stützschicht aufgebaut ist.

3. Verfahren nach Anspruch 1 oder 2, **dadurch gekennzeichnet, dass** der Filterkuchen aus einem vor oder während der Filtration zugesetzten Filterhilfsmittel aufgebaut wird.

4. Verfahren nach einem der vorhergehenden Ansprüche, **dadurch gekennzeichnet, dass** als Filtermaterial ein Filtergewebe mit einer Luftdurchlässigkeit von 700 - 1300 l/m²s bei 200 Pa Differenzdruck eingesetzt wird.

5. Verfahren nach einem der vorhergehenden Ansprüche, **dadurch gekennzeichnet, dass** aus dem Rejekt schwere Partikel mit einem Kornspektrum von 30 - 200 Mikrometer, mittels eines Dichte-Trennverfahrens, wie zum Beispiel eines Hydrozyklons, abgetrennt und wieder vor den Rückspülfilter zurückgeführt werden.

6. Verfahren nach Anspruch 5, **dadurch gekennzeichnet, dass** dem Filtrationsverfahren gezielt schwere Partikel zudosiert werden, die mittels eines Dichte-Trennverfahrens aus dem Rejekt abgetrennt und wieder vor den Rückspülfilter zurückgeführt werden.

7. Verfahren nach Anspruch 6, **dadurch gekennzeichnet, dass** die schweren Partikel Feinsand, Metallpulver oder andere feinkörnige schwere Pulver mit einem Kornspektrum von 30 Mikrometer bis 200 Mikrometer und einer Dichte von 1.500 kg/m³ bis 10.000 kg/m³, vorzugsweise von 2.000 kg/m³ bis 8.000 kg/m³ sind.

8. Verfahren nach einem der vorhergehenden Ansprüche, **dadurch gekennzeichnet dass** nach Beendigung eines Filtrationszyklus das verbleibende Fluid aus dem Unfiltratraum, dem Filtratraum und dem Rejektraum mittels eines Gases verdrängt wird und anschließend der Feststoff mit selbigem Gas getrocknet und pneumatisch ausgetragen wird.

9. Filterapparat zur Durchführung des Verfahrens nach einem der vorhergehenden Ansprüche, bestehend aus einem zylindrischen Gehäuse, einem darin koaxial eingebauten zylindrischen und perforierten Stützkörper, einem Filtermaterial, einem Stützgewebe, sowie einer darin befindlichen beweglichen Rückspülvorrichtung, **dadurch gekennzeichnet, dass** das Filtermaterial aus einem Filtergewebe mit einer Luftdurchlässigkeit von 700 - 1300 l/m²s bei 200 Pa Differenzdruck besteht.

10. Filterapparat zur Durchführung des Verfahrens nach einem der Ansprüche 1 bis 8, bestehend aus einem zylindrischen Gehäuse, einem darin koaxial eingebauten zylindrischen und perforierten Stützkörper, einem Filtermaterial, einem Stützgewebe, sowie einer darin befindlichen befindlichen beweglichen Rückspülvorrichtung, **dadurch gekennzeichnet, dass** das Filtermaterial aus einem Feinstlochblech mit schlitzförmigen Öffnungen besteht.

11. Filterapparat nach einem der vorhergehenden Ansprüche, **dadurch gekennzeichnet, dass** sich der Filterkuchen in den Perforationen des Stützkörpers aufbauen kann, ohne die Rückspüleinrichtung dadurch zu behindern.

12. Filterapparat nach einem der vorhergehenden Ansprüche, **dadurch gekennzeichnet, dass** eine Abdichtung einen direkten Fluss von Unfiltrat in den Rejektraum verhindert.

13. Filterapparat nach einem der vorgehenden Ansprüche, **dadurch gekennzeichnet, dass** eine Spannvorrichtung zur gleichmäßigen Aufspannung des Filtermaterials auf den Stützkörper vorgesehen ist.

## Claims

1. A process for the filtration of fluids, particularly of aqueous media, by means of a backwash filter apparatus that consists of a cylindrical housing, a cylindrical and perforated support body installed coaxially therein, a filter material, a support fabric, as well as a movable backwash device disposed therein, which process comprises the following steps:
a) forming a filter cake in the perforation of the support body;
b) separating the finer particles and the particles having a slimy or compressible consistency, respectively, at or in the filter cake;
c) backwashing after attainment of the predefined filter load or the maximum permissible pressure differential, or when the filtrate volume flow drops below a minimum.

2. The process as claimed in claim 1, **characterized in that**, at the beginning of the filtration, the filtrate is circulated in a circuit until the necessary support layer has been formed.

3. The process as claimed in claims 1 or 2, **characterized in that** the filter cake is formed of a filter aid added prior to or during the filtration.

4. The process as claimed in any of the preceding claims, **characterized in that** a filter fabric having an air permeability of 700 - 1,300 l/m²s at a pressure differential of 200 Pa is used as the filter material.

5. The process as claimed in any of the preceding claims, **characterized in that** heavy particles with a grain spectrum from 30 - 200 micrometers are separated from the reject by means of a density separation process, such as for example by means of a hydrocyclone, and are returned to a location upstream of the backwash filter.

6. The process as claimed in claim 5, **characterized in that** heavy particles are added selectively to the filtration process, which particles are separated from the reject by means of a density separation process and are returned to a location upstream of the backwash filter.

7. The process as claimed in claim 6, **characterized in that** the heavy particles are fine sand, metal powder, or other fine-grained types of heavy powder with a grain spectrum from 30 micrometers to 200 micrometers and a density from 1,500 kg/m³ to 10,000 kg/m³, preferably from 2,000 kg/m³ to 8,000 kg/m³.

8. The process as claimed in any of the preceding claims, **characterized in that** following the completion of a filtration cycle the remaining fluid is pushed out of the unfiltrate chamber, the filtrate chamber, and the reject chamber by means of a gas and the solids are subsequently dried and pneumatically discharged using the same gas.

9. A filter apparatus for carrying out the process as claimed in any of the preceding claims, consisting of a cylindrical housing, a cylindrical and perforated support body installed coaxially therein, a filter material, a support fabric, as well as a movable backwash device disposed therein, **characterized in that** the filter material consists of a filter fabric having an air permeability of 700 - 1,300 l/m²s at a pressure differential of 200 Pa.

10. A filter apparatus for carrying out the process as claimed in any of claims 1 to 8, consisting of a cylindrical housing, a cylindrical and perforated support body installed coaxially therein, a filter material, a support fabric, as well as a movable backwash device disposed therein, **characterized in that** the filter material consists of an ultrathin perforated metal sheet having slot-shaped openings.

11. The filter apparatus as claimed in any of the preceding claims, **characterized in that** the filter cake may be formed in the perforations of the support body without, as a result thereof, interfering with the backwash unit.

12. The filter apparatus as claimed in any of the preceding claims, **characterized in that** a sealing prevents a direct flow of unfiltrate into the reject chamber.

13. The filter apparatus as claimed in any of the preceding claims, **characterized in that** a clamping device is provided for uniform clamping of the filter material onto the support body.

## Revendications

1. Procédé de filtration de fluides, notamment de milieux aqueux, au moyen d'un appareil de filtration à rétrolavage, comprenant un boîtier cylindrique, un corps de soutien cylindrique et perforé, monté à l'intérieur de façon coaxiale, un matériau filtrant, un tissu de soutien, ainsi qu'un dispositif de rétrolavage mobile se trouvant à l'intérieur, lequel procédé comporte les étapes suivantes :
a) constitution d'un gâteau de filtration dans la perforation du corps de soutien
b) séparation des particules plus fines ou des particules présentant une consistance visqueuse ou comprimable sur ou dans le gâteau de filtration
c) rétrolavage après avoir atteint la charge prédéfinie du filtre ou la pression différentielle maximale autorisée, ou si le débit volumique du filtrat tombe sous une certaine valeur minimale.

2. Procédé selon la revendication 1, **caractérisé en ce que**, en début de filtration, le filtrat passe dans le circuit jusqu'à ce que la couche de soutien nécessaire soit constituée.

3. Procédé selon les revendications 1 ou 2, **caractérisé en ce que** le gâteau de filtration est constitué d'un adjuvant de filtration ajouté avant ou pendant la filtration.

4. Procédé selon l'une des revendications ci-dessus, **caractérisé en ce que** le matériau filtrant utilisé est un tissu filtrant avec une perméabilité à l'air de 700 à 1 300 l/m²s à 200 Pa de pression différentielle.

5. Procédé selon l'une des revendications ci-dessus, **caractérisé en ce que** les particules lourdes ayant une granulométrie de 30 à 200 micromètres, sont séparées du rejet au moyen d'un procédé de séparation densimétrique, un hydrocyclone par exemple, et réintroduites avant le filtre de rétrolavage.

6. Procédé selon la revendication 5, **caractérisé en ce que** des particules lourdes, séparées du rejet au moyen d'un procédé de séparation densimétrique et réintroduites avant le filtre de rétrolavage, sont ajoutées de manière ciblée au processus de filtration.

7. Procédé selon la revendication 6, **caractérisé en ce que** les particules lourdes sont du sable fin, de la poudre de métal ou d'autres poudres lourdes à grain fin ayant une granulométrie de 30 micromètres à 200 micromètres et une densité de 1 500 kg/m³ à 10 000 kg/m³, de préférence de 2.000 kg/m³ à 8.000 kg/m³.

8. Procédé selon l'une des revendications ci-dessus, **caractérisé en ce que**, une fois le cycle de filtration terminé, le fluide restant est refoulé, au moyen d'un gaz, de la chambre à fluide non filtré, de la chambre à filtrat et de la chambre à rejet, et que le solide est ensuite séché avec le même gaz et évacué pneumatiquement.

9. Appareil de filtration aux fins de réalisation du procédé selon l'une des revendications ci-dessus, comprenant un boîtier cylindrique, un corps de soutien cylindrique et perforé, monté à l'intérieur de façon coaxiale, un matériau filtrant, un tissu de soutien, ainsi qu'un dispositif de rétrolavage mobile se trouvant à l'intérieur, **caractérisé en ce que** le matériau filtrant est constitué d'un tissu filtrant avec une perméabilité à l'air de 700 à 1300 l/m²s à 200 Pa de pression différentielle.

10. Appareil de filtration aux fins de réalisation du procédé selon l'une des revendications 1 à 8, comprenant un boîtier cylindrique, un corps de soutien cylindrique et perforé, monté à l'intérieur de façon coaxiale, un matériau filtrant, un tissu de soutien, ainsi qu'un dispositif de rétrolavage mobile se trouvant à l'intérieur, **caractérisé en ce que** le matériau filtrant est constitué d'une tôle microperforée à ouvertures en forme de fente.

11. Appareil de filtration selon l'une des revendications ci-dessus, **caractérisé en ce que** le gâteau de filtration peut se constituer dans les perforations du corps de soutien sans entraver le dispositif de rétrolavage.

12. Appareil de filtration selon l'une des revendications ci-dessus, **caractérisé en ce qu'**un joint empêche un flux direct de fluide non filtré dans la chambre à rejet.

13. Appareil de filtration selon l'une des revendications ci-dessus, **caractérisé en ce qu'**un dispositif de fixation destiné à tendre uniformément le matériau filtrant est prévu sur le corps de soutien.
